# EUROPÄISCHE PATENTSCHRIFT

(11) **EP 2 848 924 B1**
(45) Veröffentlichungstag und Bekanntmachung des Hinweises auf die Patenterteilung: **24.08.2016**
(21) Anmeldenummer: 13184017.5
(22) Anmeldetag: 11.09.2013
(51) Int. Cl.: G01N 23/20

(54) **Temperierkammer für kompaktes Röntgengerät**
Tempering chamber for compact x-ray apparatus
Chambre de mise à température pour appareil radiographique compact

(43) Veröffentlichungstag der Anmeldung: 18.03.2015
(73) Patentinhaber: Anton Paar GmbH, 8054 Graz (AT)
(72) Erfinder: Gautsch, Josef, 8044 Graz (AT); Resch, Christian, 8020 Graz (AT)
(74) Vertreter: Dilg, Haeusler, Schindelmann Patentanwaltsgesellschaft mbH

(56) Entgegenhaltungen:
- WO-A1-2004/005904
- DE-U1-202004 007 301
- TALAGAÃ+-IS B ET AL: "Novel device for simultaneous volumetric and x-ray diffraction measurements on metal-hydrogen systems", REVIEW OF SCIENTIFIC INSTRUMENTS, AIP, MELVILLE, NY, US, Bd. 80, Nr. 7, 1. Juli 2009 (2009-07-01), Seiten 73901-73901, XP012128389, ISSN: 0034-6748, DOI: 10.1063/1.3157086
- BERTRAM F ET AL: "A compact high vacuum heating chamber forx-ray scattering studies", REVIEW OF SCIENTIFIC INSTRUMENTS, AIP, MELVILLE, NY, US, Bd. 83, Nr. 8, 1. August 2012 (2012-08-01) , Seiten 83904-83904, XP012162556, ISSN: 0034-6748, DOI: 10.1063/1.4746290 [gefunden am 2012-08-29]
- "Non-ambient XRD Diffraction Solutions", , 1. Januar 2012 (2012-01-01), XP055089074, Gefunden im Internet: URL:http://www.bruker.com/fileadmin/user_u pload/8-PDF-Docs/X-rayDiffraction_Elementa lAnalysis/XRD/Brochures/Non-ambient_brochu re_DOC-B88-EXS023_V1_low.pdf [gefunden am 2013-11-19]
- "Bruker AXS", , 1. Januar 2009 (2009-01-01), XP055089193, Gefunden im Internet: URL:http://www.bruker.com/fileadmin/user_u pload/8-PDF-Docs/X-rayDiffraction_Elementa lAnalysis/XRD/ProductSheets/New_sample_sta ges_for_D8_ADVANCE_DOC-S88-EXS034_high.pdf [gefunden am 2013-11-19]
- BORMANN T ET AL: "Determination of strain fields in porous shape memory alloys using micro computed tomography", SPIE, PO BOX 10 BELLINGHAM WA 98227-0010 USA, 1. Januar 2010 (2010-01-01), XP040527846,

## Beschreibung

### Gebiet der Erfindung

Die Erfindung betrifft das Gebiet der röntgenstrahl-basierten Analyse von Materialien, insbesondere das Gebiet der Probentemperierkammern für kompakte röntgenstrahl-basierte Analysesysteme.

### Hintergrund

Röntgenbeugungsexperimente eignen sich hervorragend zur strukturellen Charakterisierung von homogenen, inhomogenen und heterogenen Materialien, da die verwendete Wellenlänge des Röntgenstrahls in der Größenordnung der charakteristischen Abstände im untersuchten Material liegt. In Fachkreisen ist es allgemein bekannt, dass die eingedrungene Röntgenstrahlung elastisch mit dem Material wechselwirkt und konstruktive Interferenzeffekte nur dann beobachtbar werden, wenn unter spekularen Bedingungen die Bragg-Gleichung (nλ=2d*sin(2θ)/2)) erfüllt wird (n bezeichnet die ganzzahlige Ordnungszahl, λ die Wellenlänge, θ den Streuwinkel und d bezeichnet die für das Material charakteristischen Abstände, beispielsweise Netzebenen, Molekülabstände). Aus dem Experiment resultiert, je nach Struktur des untersuchten Materials, das charakteristische Beugungsbild. Das Beugungsbild wird dazu verwendet um Aussagen über die qualitativen und quantitativen Kristalleigenschaften der untersuchten Probe zu treffen.

Röntgendiffraktion (XRD) ist eine spezielle Möglichkeit, um diese Materialuntersuchungen durchzuführen, und kann in Transmissions- oder in Reflexionsgeometrie erfolgen. Dabei trifft der Röntgenstrahl unter bestimmten, sich im Experiment kontinuierlich ändernden Streuwinkeln θ auf die Probe (Reflexionsgeometrie) oder die Probe wird vom Strahlenbündel durchstrahlt (Transmissionsgeometrie).

Röntgenexperimente zur Strukturaufklärung von Materialien können entweder an Großanlagen, wie Synchrotron oder Linearbeschleunigern, durchgeführt werden oder in sog. Laborgeräten, wie Standard-Röntgendiffraktometer oder kleine Tischröntgendiffraktometer (Benchtop- Röntgendiffraktometer). Typische Laborgeräte bestehen aus einer Strahlenquelle, primärseitigen und sekundärseitigen Röntgenoptiken, einer Probenjustiereinrichtung und einer Detektoreinheit. Aufgrund der verwendeten Röntgenröhren als Strahlenquelle ist es notwendig, diese Röntgenlaborgeräte als Vollschutzgeräte zu konzipieren. Das bedeutet, dass beispielsweise in Deutschland die gesetzliche höchstzulässige Ortsdosisleistung 3 Mikrosievert pro Stunde (µSv/h) in 0,1 Meter Entfernung vom vollständig geschlossenen Schutzgehäuse nicht überschreiten darf (http://www.bfs.de/de/bfs/dienstleitungen/baz/Baz_roev). Herkömmliche Röntgenlaborgeräte benötigen für den Betrieb der Röntgenquelle neben einer speziell abgesicherten Spannungsversorgung auch einen Kühlkreislauf, welcher meist über einen geschlossenen, externen Flüssigkeitskreislauf erfolgt. Um die gesetzlichen Bestimmungen für Röntgenvollschutzeinrichtungen zu gewährleisten ist es notwendig diese Anschlüsse je nach Bauart des Vollschutzgerätes von außen über speziell gesicherte Wege in die Gerätekammer zur Röntgenquelle zu schleusen. Im Gegensatz dazu sind sogenannte Benchtop-Röntgendiffraktometer kleine, kompakte Tischgeräte, welche zumeist über eine Standardnetzspannungsversorgung gespeist werden, meist keinen externen Kühlkreislauf benötigen und somit keine externen Kühlflüssigkeitsanschlüsse aufweisen. Aus diesem Grund werden Benchtop-Röntgendiffraktometer als einfache, transportable Vollschutzgeräte ohne zusätzlichen Installationsaufwand beworben, welche flexibel im Qualitätsmanagement oder als Labormessgerät für wissenschaftliche/pädagogische Zwecke einsetzbar sind.

Die aus dem Röntgenbeugungsexperiment resultierenden Beugungsbilder variieren stark mit der Probentemperatur. Im Bereich Materialcharakterisierung mittels Röntgendiffraktion (XRD) hat es sich als besonders vielversprechend gezeigt, die strukturellen Eigenschaften der Materialien temperaturabhängig zu untersuchen, da man eine verbesserte Charakterisierung des untersuchten Materials beispielsweise unter Herstellungs- und Anwendungsbedingungen bewerkstelligen kann. Aus diesem Grund gibt es bereits eine Vielzahl von Probentemperierkammern für Standard-Labordiffraktometer oder für Synchrotronanwendungen, welche zwischen der Röntgenquelle und dem Detektor positioniert werden. Dabei ist die Art und Weise der Heizung und/oder Kühlung der Probe in der Heizkammer ausschlaggebend.

Aus dem Stand der Technik sind diverse heizbare Probenkammern für Standard-Labordiffraktometer oder Synchrotronanwendungen bekannt (siehe zum Beispiel DE 20109573 U1, JPH 0342561 A, DE 102004029721 A1, WO 2013/005180 A1, WO 00/23795 A1 und DE 202004007301 U1). Diese weisen aber mehrere Nachteile auf, welche die Nutzung solcher Heizkammern in vollgeschützten Benchtop-Röntgendiffraktometern unmöglich machen. Die externen Kühlkreisläufe der bekannten Röntgenheizkammern, deren Steuerungs - und Regelungseinheiten und Gasdurchflussanschlüsse können in Benchtop-Röntgendiffraktometern nicht eingesetzt werden. Der große Vorteil der Benchtop-Röntgendiffraktometer ist, dass diese geschlossenen Vollschutzgeräte ohne externen Kühlungskreisanschluss, ohne spezielle Netzspannungsversorgung auskommen und flexibel transportiert werden können, da sie keine zusätzlichen Betriebs- und Versorgungsanschlüsse am Messstandort benötigen. Die im Stand der Technik beschriebenen Temperierkammern sind nicht nur aufgrund deren geometrischen Abmessungen und deren Gewicht unbrauchbar für die kleinen Benchtop-Geräte sondern sind auch für die Sicherheitsanforderungen eines Vollschutzgerätes nicht geeignet, da für den erfindungsgemäßen Betrieb der im Stand der Technik beschriebenen Temperierkammern diverse externe Anschlüsse notwendig sind, welche in einem tischgroßen Vollschutzgerät nicht zur Verfügung stehen. Problematisch ist hier vor allem die Durchführung für eine Kühlung.

Talaganis et al "Novel device for simultaneous volumetric and x-ray diffraction measurements on metal-hydrogen systems" (REVIEW OF SCIENTIFIC INSTRUMENTS, AIP, MELVILLE, NY, US, Bd. 80, Nr. 7, 1. Juli 2009, Seiten 73901-1 - 73901-6, ISSN: 0034-6748, DOI: 10.1063/1.3157086) beschreibt eine Reaktionskammer für gleichzeitige volumetrische Messungen und Röntgendiffraktionsmessungen. Die beschriebene Kammer besteht aus drei Teilen, nämlich einem Hauptkörper, einer Vorderplatte mit Probenhalter und einem hinteren Deckel, die zum Bilden einer geschlossenen Kammer eingerichtet sind. Die beschriebene Reaktionskammer weist auch eine elektrische Heizvorrichtung und einen Temperatursensor auf, die beide durch die elektrische Durchführung mit einer kammerexternen Steuerung verbunden sind. Die beschriebene Reaktionskammer verwendet eine externe Wasserkühlung.

Bertram et al. "A compact high vacuum heating chamber for x-ray scattering studies" (REVIEW OF SCIENTIFIC INSTRUMENTS, AIP, MELVILLE, NY, US, Bd. 83, Nr. 8, 1. August 2012, Seiten 83904-1 - 83904-5, ISSN: 0034-6748, DOI: 10.1063/1.4746290) beschreibt eine kompakte Heizkammer für Röntgenbeugungsstudien, insbesondere eine zweiteilige Kammer bestehend aus Kammerkörper und Berylliumkuppel. Die Probe wird oben auf einem Probenhalter angebracht und von einem Heizdraht erhitzt.

Bormann et al "Determination of strain fields in porous shape memory alloys using micro computed tomography" (SPIE, PO BOX 10 BELLINGHAM WA 98227-0010 USA, 1. Januar 2010) bezieht sich auf die Bestimmung von Spannungsfeldern in porösen Formgedächtnislegierungen unter Verwendung von Mikrocomputertomografie.

Der vorliegenden Erfindung liegt die Aufgabe zugrunde, die oben erwähnten Nachteile aus dem Stand der Technik zu beseitigen und eine Probentemperierkammer bereitzustellen, die mit kompakten Benchtop-Röntgengeräten und Röntgenvollschutzgeräten in einfacher Weise und unter Einhaltung der Sicherheitsvorschriften verwendet werden kann.

### Zusammenfassung

Diese Aufgabe wird gelöst durch die Gegenstände des unabhängigen Patentanspruchs 1. Vorteilhafte Ausführungsformen der vorliegenden Erfindung sind in den abhängigen Ansprüchen beschrieben.

Gemäß einem ersten Aspekt der Erfindung wird eine Probentemperierkammer für ein Benchtop-Röntgengerät und/oder Röntgenvollschutzgerät gemäß dem Patentanspruch 1 beschrieben. Die beschriebene Probentemperierkammer weist (a) einen ersten Kammerteil und einen zweiten Kammerteil, die miteinander verbindbar und zum Bilden einer geschlossenen Kammer eingerichtet sind, (b) einen Probenhalter und (c) eine integrierte Temperiereinrichtung zum Temperieren einer Probe, die an dem Probenhalter angebracht ist, auf.

Der beschriebenen Probentemperierkammer liegt die Erkenntnis zugrunde, dass eine integrierte Temperiereinrichtung es ermöglicht, eine an dem Probenhalter angebrachten Probe zu temperieren, ohne Durchführungen von der Probentemperierkammer nach außerhalb eines Röntgenanalysegeräts, wie zum Beispiel eines Benchtop-Röntgengeräts oder eines Röntgenvollschutzgeräts, bereitstellen zu müssen. Durch Einbringen der Probentemperierkammer mit zu analysierender Probe in das Röntgenanalysegerät kann die Analyse somit in einfacherer und sicherer Weise durchgeführt werden.

In diesem Dokument bezeichnet "Temperieren" insbesondere einen Vorgang, durch den die Temperatur der Probe auf einen oder eine Reihe von Werten eingestellt wird.

Der erste Kammerteil und der zweite Kammerteil sind so eingerichtet, dass sie miteinander verbunden werden können, um eine geschlossene Kammer zu bilden. Mit anderen Worten wird die Probentemperierkammer durch Verbinden der zwei Kammerteile geschlossen und durch Trennen der zwei Kammerteile geöffnet. Die Probentemperierkammer weist vorzugsweise einen Durchmesser von maximal 100 mm und eine Länge von maximal 150 mm auf. Zum Analysieren einer Probe werden der erste Kammerteil und der zweite Kammerteil getrennt, die Probe wird an dem Probenhalter angebracht und die beiden Kammerteile werden miteinander verbunden, so dass die Probe sich in der dadurch gebildeten geschlossenen Kammer befindet und von der umgebenden Atmosphäre isoliert ist. Die Probentemperierkammer wird dann in ein Röntgenanalysegerät eingebracht und befestigt, die Probe wird durch die integrierte Temperiereinrichtung für die durchzuführende Analyse temperiert und die für die Analyse benötigten Messungen werden durchgeführt. Wenn die Handhabung der Probe keine spezielle Schutzatmosphäre und/oder Vorbehandlung benötigt, kann gegebenenfalls die Probe auch bei im Röntgenanalysegerät eingebauter Kammer durch Öffnen bzw. Trennen der beiden Kammerteile und Herausnehmen des Probenträgers gewechselt werden.

Gemäß der Erfindung weist die integrierte Temperiereinrichtung ein Temperierelement zum Aufwärmen und/oder Abkühlen der Probe auf.

Das Temperierelement mag insbesondere in der Nähe von dem Probenhalter angebracht sein, damit Wärme effizient der Probe zugeführt oder von der Probe abgeführt werden kann.

Gemäß einem Ausführungsbeispiel der Erfindung weist das Temperierelement ein elektrisches Widerstandselement zum Aufwärmen der Probe auf.

Das elektrische Widerstandselement mag insbesondere unter dem Probehalter, zum Beispiel an oder in der Nähe von einer Unterseite des Probenhalters, angeordnet sein, so dass Wärme durch den Probenhalter zu der Probe zugeführt werden kann, wenn ein elektrischer Strom durch das Widerstandselement geleitet wird.

Das elektrische Widerstandselement ermöglicht, dass sich die Probentemperatur in einem Bereich zwischen Raumtemperatur und etwa 650°C oder höher bewegt.

Gemäß einem weiteren Ausführungsbeispiel der Erfindung weist das Temperierelement ein Peltier-Element zum Aufwärmen und Abkühlen der Probe auf.

Das Peltier-Element mag insbesondere unter dem Probehalter, zum Beispiel an oder in der Nähe von einer Unterseite des Probenhalters, angeordnet sein, so dass Wärme durch den Probenhalter zu der Probe zugeführt bzw. von der Probe abgeführt werden kann, wenn ein elektrischer Strom durch das Peltier-Element geleitet wird, wobei die Richtung des elektrischen Stroms dafür entscheidend ist, ob Wärme zu der Probe zugeführt oder von der Probe abgeführt wird.

Gemäß der Erfindung weist die Probentemperierkammer ferner zumindest einen Temperatursensor zum Erfassen der Probentemperatur auf, wobei die Temperiereinrichtung ferner eine Steuereinheit aufweist, die mit dem zumindest einenTemperatursensor verbunden und zum Ansteuern des Temperierelements in Abhängigkeit von der durch den zumindest einen Temperatursensor erfassten Probentemperatur konfiguriert ist, um eine vorbestimmte Probentemperatur zu erreichen und/oder Temperaturprofile aufzuprägen. Bei Verwendung mehrerer Temperatursensoren können, insbesondere bei schlecht wärmeleitenden Proben, mehrere Probenbereiche gleichzeitig charakterisiert werden und in die Regelung, das heißt die Ansteuerung des Temperierelements, einfließen.

Der zumindest einen Temperatursensor mag insbesondere in der Nähe von dem Probenhalter angebracht sein, um die Probentemperatur präzise erfassen zu können.

Die Steuereinheit ist mit dem zumindest einen Temperatursensor verbunden und dazu eingerichtet, das Temperierelement derart anzusteuern bzw. zu regeln, dass eine vorbestimmte Probentemperatur eingestellt wird oder dass ein vorbestimmtes Probentemperaturintervall durchgelaufen wird. Die Steuereinheit mag insbesondere dazu eingerichtet sein, einen PID-Regelalgorithmus (Proportional-Integral-Differenzial-Regelalgorithmus) oder einen anderen geeigneten Regelalgorithmus durchzuführen.

Gemäß der Erfindung weist die Probentemperierkammer ferner eine aktive Kühlung zum Abführen von Wärme aus der Probentemperierkammer auf.

Die aktive Kühlung ist insbesondere dazu eingerichtet, Wärme durch eine oder mehrere Kammerwände abzuführen. Dazu mag insbesondere eine thermische Verbindung zwischen Probenhalter und Kammerwand bzw. Kammerwänden vorgesehen sein, zum Beispiel mittels einer metallischen Verbindung zwischen Probenhalter und Kammerwand. Die Kammerwand bzw. Kammerwände mag bzw. mögen aus Aluminium oder aus einem Material mit ähnlich guten Wärmeleiteigenschaften bestehen.

In Ausführungsformen mit Peltier-Element ermöglicht die aktive Kühlung durch Abfuhr der beim Abkühlen des Peltier-Elements entstehenden Wärme, dass Probentemperaturen unter Raumtemperatur (Umgebungstemperatur) erreicht werden. Insbesondere kann sich die Probentemperatur in solchen Ausführungsformen zwischen etwa -20°C und etwa 200°C bewegen, wobei eine möglichst gute thermische Kopplung zum Kammergehäuse sichergestellt werden muss.

Gemäß der Erfindung weist die aktive Kühlung einen Kühlkörper und einen Ventilator auf.

Der Kühlkörper mag insbesondere eine Mehrzahl von Kühlrippen aufweisen.

Der Ventilator mag insbesondere so angebracht sein, dass er die Wärmeabfuhr von dem Kühlkörper und/oder der Kammerwand unterstützt. Der Ventilator mag insbesondere mit der Steuereinheit derart verbunden werden, dass diese den Ventilator ein- und ausschalten kann. Die Steuereinheit mag ferner dazu eingerichtet sein, die Rotationsgeschwindigkeit des Ventilators zu regeln, zum Beispiel in Abhängigkeit von der mittels des zumindest einen Temperatursensors erfassten Probentemperatur.

Zusätzlich zu dem Kühlkörper mag auch ein Wärmetauscher vorgesehen sein.

Gemäß einem weiteren Ausführungsbeispiel der Erfindung ist die Steuereinheit in dem ersten Kammerteil angebracht, wobei der Kühlkörper und der Ventilator an einer Außenfläche des ersten Kammerteils angebracht sind und wobei der zweite Kammerteil ein röntgenstrahl-durchlässiges Fenster aufweist.

Die Steuereinheit mag an einer Innenfläche des ersten Kammerteils oder auf einem im Inneren des ersten Kammerteils befestigten Trägers angebracht sein und mag insbesondere eine thermische Isolierung aufweisen, die als Schutz der in der Steuereinheit enthaltene Elektronik gegen hohe Temperaturen in der Probentemperierkammer dient.

Der Probenhalter mag auch Teil des ersten Kammerteils und so angebracht sein, dass er relativ zu dem ersten Kammerteil so hervorsteht, dass er beim Verbinden der ersten und zweiten Kammerteil von dem zweiten Kammerteil aufgenommen und in diesem so platziert wird, dass durch das röntgenstrahldurchlässige Fenster hineintretende Röntgenstrahlung auf eine an dem Probenhalter angebrachten Probe trifft. Die von der Probe reflektierte und/oder transmittierte Röntgenstrahlung verlässt dann auch die Probentemperierkammer durch das röntgenstrahl-durchlässige Fenster, so dass sie von Sensoren in dem Röntgenanalysegerät erfasst werden kann.

Mit anderen Worten mögen der Probenhalter und die integrierte Temperatureinrichtung Teil des ersten Kammerteils sein, wobei der zweite Kammerteil hauptsächlich den Raum definieren mag, der durch das Verbinden des ersten Kammerteils mit dem zweiten Kammerteil die geschlossene Kammer bildet, die zur Untersuchung der Probe unter definierter Atmosphäre mit Röntgenstrahlung verwendet wird.

Die Verbindung der zwei Kammerteile mag von einer Schiebeeinrichtung unterstützt werden, welche so angebracht ist, dass die beiden Kammerteile gegen und von einander geschoben werden können.

Gemäß einem weiteren Ausführungsbeispiel der Erfindung kann der Probenhalter verschiedene Probenvolumen beinhalten.

Der Probenhalter mag insbesondere zum Aufnehmen von tauschbaren Probentiegel in verschiedenen Größen eingerichtet sein, wobei die Probentiegel des Weiteren für diverse amorphe, kristalline, feste oder flüssige Proben etc. ausgeführt werden mögen.

Somit kann eine große Variation von Probenmengen, -größen und -arten an dem Probenhalter zur Analyse angebracht werden.

Gemäß der Erfindung weist die Probentemperierkammer ferner eine Eingabevorrichtung zum Eingeben einer vorbestimmten Probentemperatur oder eines vorbestimmten Probentemperaturbereichs durch Benutzer auf.

Die Eingabevorrichtung mag insbesondere an eine Außenfläche des ersten Kammerteils angebracht sein. Des Weiteren mag die Eingabevorrichtung beispielsweise ein Display und einige Schalter und/oder Druckknöpfe oder eine Tastatur zur Eingabe vorbestimmter Temperaturwerte, wie zum Beispiel Anfangstemperatur und/oder Endtemperatur, aufweisen.

Gemäß einem weiteren Ausführungsbeispiel der Erfindung weist die Probentemperierkammer ferner einen Versorgungsanschluss zum Verbinden der Probentemperierkammer mit einer elektrischen Stromversorgung und/oder einen Datenanschluss zum Verbinden der Probentemperierkammer mit einem Datenanschluss eines Benchtop-Röntgengeräts und/oder Röntgenvollschutzgeräts auf.

Der Versorgungsanschluss ermöglicht, dass die Probentemperierkammer, insbesondere die integrierte Temperiereinrichtung, mit einer Stromversorgung des Röntgenanalysegeräts verbunden wird. Somit kann eine Verbindung nach außerhalb des Röntgenanalysegeräts vermieden werden.

In ähnlicher Weise ermöglicht der Datenanschluss, dass die Probentemperierkammer, insbesondere die integrierte Temperiereinrichtung, mit einem Datenanschluss des Röntgenanalysegeräts verbunden wird. Somit kann eine extra Verbindung nach außerhalb des Röntgenanalysegeräts vermieden werden und die Datenkommunikation von außen mit der integrierten Temperiereinrichtung durch den im Röntgenanalysegerät typischerweise schon vorhandenen Datenanschluss erfolgen.

Gemäß einem weiteren Ausführungsbeispiel der Erfindung ist/sind der Versorgungsanschluss und/oder der Datenanschluss abnehmbar.

Abnehmbare Anschlüsse erleichtern die Handhabung der Probentemperierkammer außerhalb des Röntgenanalysegeräts, zum Beispiel während Probenpräparationen in einer Glovebox.

Gemäß einem weiteren Ausführungsbeispiel der Erfindung weist die Probentemperierkammer ferner eine Einheit zum Bereitstellen einer drahtlosen Datenverbindung zwischen der Probentemperierkammer und einem Benchtop-Röntgengerät und/oder Röntgenvollschutzgerät auf.

Die Einheit zum Bereitstellen einer drahtlosen Datenverbindung mag insbesondere eine Bluetooth-Einheit (IEEE 802.15.1) oder eine WLAN-Einheit aufweisen.

Die drahtlose Datenverbindung zwischen Probentemperierkammer, insbesondere der Steuereinheit der integrierten Temperiereinrichtung, und Röntgenanalysegerät ermöglicht eine noch einfachere Handhabung der Probentemperierkammer.

In diesem Ausführungsbeispiel mag die Einheit zum Bereitstellen einer drahtlosen Datenverbindung ferner ermöglichen, dass Daten mittels Applikationssoftware auf einem PC oder einem mobilen Endgerät an die und/oder von der Probentemperierkammer übertragen werden.

Gemäß einem weiteren Ausführungsbeispiel der Erfindung weist die Probentemperierkammer ferner ein Schnellverschlusselement zur selbstjustierenden Montage der Probentemperierkammer in einem Benchtop-Röntgengerät und/oder Röntgenvollschutzgerät auf.

Das Schnellverschlusselement erleichtert die Montage der Probentemperierkammer und vor allem die korrekte Positionierung der Probentemperierkammer in dem Röntgenanalysegerät.

Das Schnellverschlusselement mag insbesondere dazu eingerichtet sein, mit einem Gegenstück in einem Röntgenanalysegerät gekoppelt zu werden.

Gemäß einem weiteren Ausführungsbeispiel der Erfindung weist die Probentemperierkammer ferner Mittel zum gasdichten Verriegeln der geschlossenen Kammer auf.

Das Mittel zum gasdichten Verriegeln ermöglicht unter anderem den Transport der Probentemperierkammer in und aus einer Glovebox, ohne die Atmosphäre in der verschlossenen Kammer zu beeinflussen.

Gemäß einem zweiten Aspekt der Erfindung wird ein System zur röntgenstrahl-basierten Analyse einer Probe beschrieben, insbesondere zur Röntgendiffraktionsmessung. Das beschriebene System weist (a) ein Benchtop-Röntgengerät oder ein Röntgenvollschutzgerät und (b) eine Probentemperierkammer gemäß dem ersten Aspekt oder einem der obigen Ausführungsbeispiele auf, die zum Einbringen und Montage in dem Benchtop-Röntgengerät oder Röntgenvollschutzgerät eingerichtet ist.

Dem beschriebenen System liegt im Wesentlichen die gleiche Erkenntnis zugrunde, wie die Probentemperierkammer gemäß dem ersten Aspekt oder einem der oben beschriebenen Ausführungsbeispiele, nämlich dass eine in der Probentemperierkammer integrierte Temperiereinrichtung es ermöglicht, eine an dem Probenhalter angebrachten Probe zu temperieren, ohne Durchführungen von der Probentemperierkammer nach außerhalb des Röntgenanalysegeräts, wie zum Beispiel eines Benchtop-Röntgengeräts oder eines Röntgenvollschutzgeräts, bereitstellen zu müssen. Das System ermöglicht somit, dass eine röntgenstrahl-basierte Analyse in einfacherer und sichererer Weise durchgeführt werden kann.

Zusammenfassend wird eine Probentemperierkammer vorgestellt, die aus zwei voneinander getrennten Teilen besteht, wobei der eine Teil aus der integrierten Temperiereinrichtung, mit aktiver Kühleinheit, und der zweite Teil aus der Probenkammer selbst bestehen. Daher ist es für die Probentemperierkammer für ein Benchtop-Röntgendiffraktometer oder ähnliches Analysegerät nicht notwendig, einen externen Regler bzw. eine externe Kühlung zu verwenden.

Die Erfindung bietet eine leichte, platzsparende Variante einer Temperierkammer für ein Röntgenanalysegerät, bewerkstelligt eine einfache Handhabung und erfordert eine einzige, leicht realisierbare, elektrische Kontaktdurchführung für ein Vollschutzgerät. Die Temperierkammer wird vorzugsweise mit einem Schnellverschlusselement mit Gegenstück am Gerät ausgestattet und kann somit leicht montiert bzw. demontiert und justiert werden. Sie mag erfindungsgemäß so ausgeführt sein, dass keine zusätzliche Justierung notwendig ist.

Die Temperierkammer mag überdies eine gasdichte Kammerverriegelung aufweisen. Sie kann aufgrund ihrer geometrischen Abmessungen und der gasdichten Kammerverriegelung leicht in die Schnellschleuse einer Glovebox eingeschleust werden, worauf dort unter Inert-Bedingungen Probenpräparationen durchgeführt werden können. So kann sichergestellt werden, dass das zu untersuchende Material nicht direkt mit Personen oder Luft in Kontakt kommen kann und/oder empfindliche Proben nur unter Schutzatmosphäre gehandhabt werden.

Die Temperierkammer mag ferner tauschbare Probentiegel für diverse amorphe, kristalline, feste oder flüssige Proben aufweisen. Die Temperierkammer kann anschließend wieder ins Benchtop-Röntgendiffraktometer eingebaut werden, ohne dass die definierte Probenatmosphäre gebrochen wird. Dadurch werden keine zusätzlichen Gasdurchführungen für diese Temperierkammer benötigt.

Es wird vorzugsweise eine Temperaturgenauigkeit von besser als 0.5°C sichergestellt, je nachdem welches Heizelement in der jeweiligen Ausführungsform verwendet wird und wie die aktive Kühlung geregelt wird. Die Kammer benötigt keine teure und unerwünschte Durchflusskühlung, beispielsweise mittels Kühlgas bzw. Kühlflüssigkeit.

### Kurze Beschreibung der Zeichnungen

Figur 1A zeigt schematisch eine Seitenansicht eines Systems zur röntgenstrahl-basierten Analyse mit einem Röntgengerät bzw. einem Benchtop-Röntgendiffraktometer und einer Probentemperierkammer gemäß einer Ausführungsform.
Figur 1B zeigt eine Seitenansicht einer Probentemperierkammer im offenen Zustand gemäß einer Ausführungsform.
Figur 1C zeigt eine Seitenansicht der in Figur 1B gezeigten Probentemperierkammer im geschlossenen Zustand.
Figur 2 zeigt eine Seitenansicht einer Probentemperierkammer im offenen Zustand gemäß einer weiteren Ausführungsform.
Figur 3 zeigt eine Draufsicht einer Probentemperierkammer im offenen Zustand gemäß einer Ausführungsform.

### Detaillierte Beschreibung

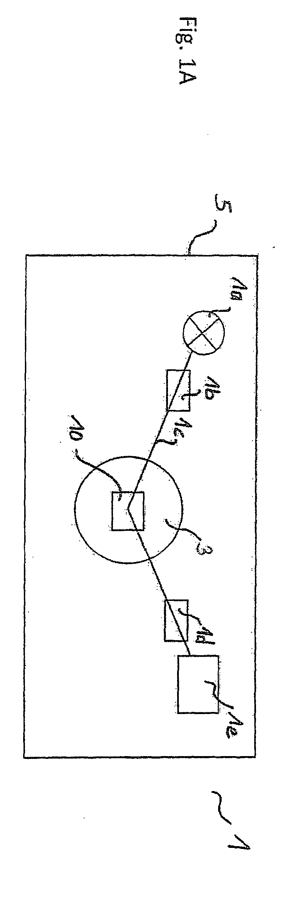

Die schematische Seitenansicht in Figur 1A zeigt ein Ausführungsbeispiel eines Systems zur röntgenstrahl-basierten Analyse. Das System weist ein Röntgengerät bzw. ein Benchtop-Röntgendiffraktometer 1 mit einer Röntgenquelle 1a, einer primärseitigen Optik 1b, Röntgenstrahl 1c, ein Goniometer 3, einer sekundärseitigen Optik 1d, einem Detektor 1e und ein speziell konstruiertes Gehäuse 5 auf, das eine unzulässig-hohe Strahlenbelastung außerhalb des Röntgengeräts bzw. Benchtop-Röntgendiffraktometers 1 verhindert. Das System weist ferner eine Probentemperierkammer 10 auf, die auch Röntgenheizkammer 10 benannt wird und am Goniometer 3 montiert ist.

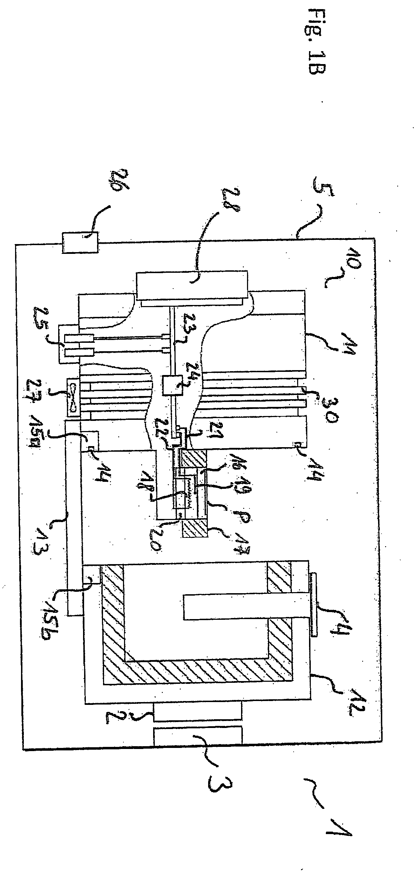

Figur 1B zeigt eine Seitenansicht einer Probentemperierkammer 10 im offenen Zustand gemäß einer Ausführungsform. Die Probentemperierkammer 10, ist zur Verwendung mit einem Röntgenanalysegerät, wie das gezeigte Benchtop-Röntgendiffraktometer 1, vorgesehen.

Die Seitenansicht in Figur 1B zeigt die Probentemperierkammer 10, welche im Allgemeinen aus einem ersten Teil 11 (Regel-und Versorgungsteil) und einem zweiten Teil 12 (Probenraumteil) besteht. Die zu analysierende Probe P wird beim Schließen der Probentemperierkammer 10 in den Probenraumteil 12 über eine Schiebevorrichtung 13 horizontal eingeführt. Die gesamte Probentemperierkammer 10 kann mittels Schnellverschlusselements 2 am Goniometer 3 des Benchtop-Röntgendiffraktometers 1 montiert werden. Die beiden Kammerteile 11, 12 werden mittels Dichtvorrichtung 14 gasdicht verbunden und über eine Verriegelung 15a, 15b verschlossen. Die Dichtvorrichtung 14 und die Verriegelung 15a, 15b sind so ausgelegt, dass die gesamte Röntgenheizkammer problemlos über eine Schnellschleuse einer Glovebox in beide Richtungen geschleust werden kann, ohne die bestehende Atmosphäre im Inneren der Probentemperierkammer 10 zu brechen.

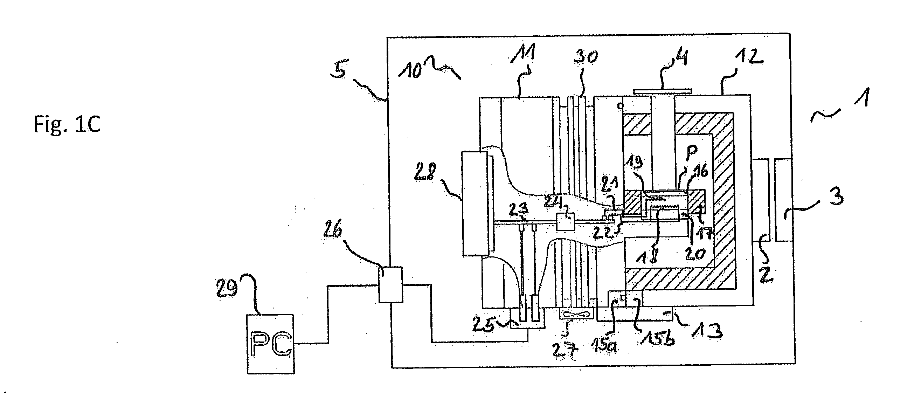

Figur 1C zeigt eine Seitenansicht der in Figur 1B gezeigten Probentemperierkammer 10 im geschlossenen Zustand. Die zum Messen verwendete Röntgenstrahlung kann während des Messvorgangs bei geschlossener Probentemperierkammer 10 über ein für Röntgenstrahlen durchlässiges Fenster 4 in den Probentemperierkammer 10 eindringen und mit der Probe P wechselwirken. Das Fenster 4 besteht vorzugsweise aus Polymerverbindungen oder aus Beryllium, und ist so an die Geometrie der Probentemperierkammer 10 angepasst, dass die gestreute Röntgenstrahlung die Probentemperierkammer 10 durch dasselbe Fenster 4 verlassen und auf einen Röntgendetektor (nicht gezeigt) treffen kann. Alternativ können auch zwei Fenster 4 verwendet werden.

Die Probe P befindet sich in einem Probenträger 16, welcher am Probentisch 17 positioniert wird. Erfindungsgemäß kann der Probenträger 16 individuell tauschbar sein, um unterschiedliche Proben wie Pulverproben, Flüssigkeiten etc. analysieren zu können. Direkt im Probentisch 17 befindet sich das Temperierelement 18 in Form eines elektrischen Widerstandselements und ein Temperatursensor 19 zur Probentemperaturerfassung. Der Probentisch 17 wird intern über eine Isoliereinheit 20 vom Gehäuse der Probentemperierkammer 10 thermisch isoliert, um ein unerwünschtes direktes Heizen des Gehäuses zu verhindern. Temperierelement 18 und Temperatursensor 19 sind über Messleitungen 21, 22 mit der Steuereinheit 23 verbunden. Dort befindet sich auch die elektrische Versorgung 24 der Probentemperierkammer 10.

Die Steuereinheit 23 und Versorgungseinheit 24 werden erfindungsgemäß vorzugsweise nur über eine gemeinsame Kontaktierung 25 mit dem Vollschutzanschluss 26 am Gehäuse 5 des Benchtop-Röntgendiffraktometers 1 verbunden (siehe Figur 1C). Dabei ist es möglich, die Regelung über einen externe Steuereinheit (nicht gezeigt) oder die im Benchtop-Röntgendiffraktometer 1 integrierte Steuer- und Auswerteeinheit (Personalcomputer) 29 zu regeln. Alternativ ist möglich, die Kammertemperatur über ein Bedienerfeld 28 direkt an der Probentemperierkammer vorzugeben.

Unmittelbar in den Regel- und Versorgungsteil 11 integriert befindet sich die aktive Kühleinheit der Probentemperierkammer 10. Bevorzugt besteht diese aus Kühlrippen 30 oder anderen Kühlkörpern mit möglichst großer Oberfläche in Kombination mit einem oder mehreren Ventilatoren 27, die die Wärme durch forcierte Konvektion abtransportieren.

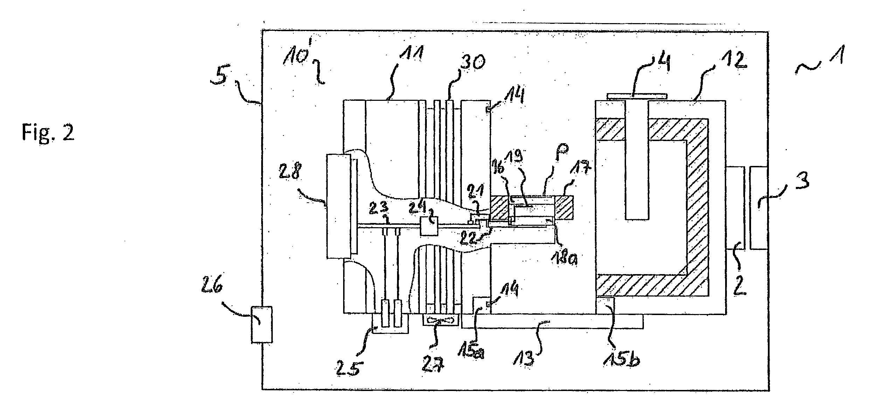

Figur 2 zeigt eine Seitenansicht einer Probentemperierkammer 10' im offenen Zustand gemäß einer weiteren Ausführungsform. Die Probentemperierkammer 10' ist weitgehend identisch mit der in Figur 1B und 1C gezeigten Probentemperierkammer 10. Folglich wird auf eine wiederholte Beschreibung der identischen Elemente verzichtet. Der wesentliche Unterschied zur oben beschriebenen Probentemperierkammer 10 ist, dass die Probentemperierkammer 10' ein Peltier-Element 18a als Temperierelement verwendet. Hier muss eine möglichst gute Wärmeleitung zwischen Gehäuse der Probentemperierkammer 10 und Probentisch 17 bestehen. Mit der aktiven, internen Kühlung ist es nun möglich die entstehende Wärme von der kalten Seite des Peltierelements abzuleiten und quasi in Kombination mit dem Ventilator 27 als aktive Gegenkühlung zu verwenden. Damit kann in dieser Ausführungsform ein Temperaturbereich von -20°C bis 200°C erreicht werden, was eine deutliche Verbesserung gegenüber dem Stand der Technik ist. Die DE 202004007301 U1 spricht vergleichsweise von Temperaturbereichen von 0°C - 100°C. Das Peltier-Element 18a kann auch durch Umpolen zum raschen Abkühlen der Probe P im Probenhalter verwendet werden, wobei die nun wärmere Rückseite des Peltier-Elements durch die forcierte Kühlung gekühlt bzw. die entstehende Wärme abgeführt wird.

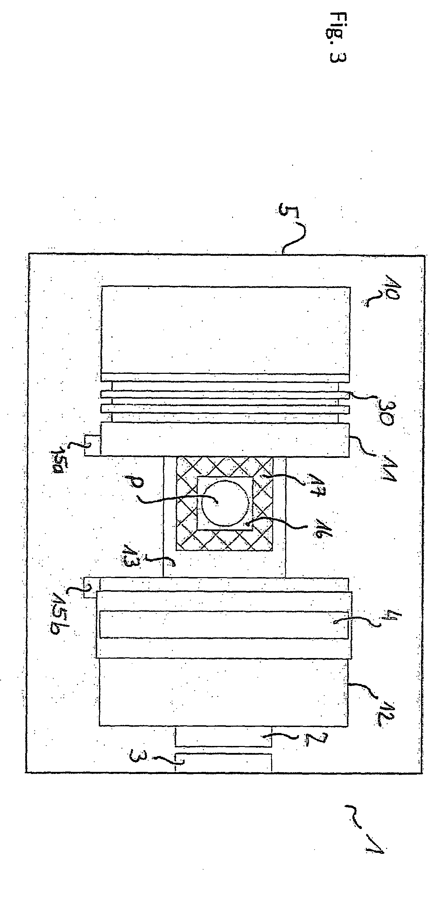

Figur 3 zeigt eine Draufsicht einer Probentemperierkammer im offenen Zustand gemäß einer der oben beschriebenen Ausführungsformen. Figur 3 zeigt die Aufsicht der offenen Probentemperierkammer 10, 10', welche wie oben beschrieben aus dem ersten Teil 11 und dem zweiten Teil 12 besteht, mit der seitlichen Verriegelungseinrichtung 15a, 15b. Figur 3 zeigt auch den Schnellverschlusselement 2, das Goniometer 3 und das Benchtop-Röntgendiffraktometers 1. Überdies ist ersichtlich, dass das für Röntgenstrahlen durchlässige Fenster 4 vorzugsweise einteilig ist. Bei offener Probentemperierkammer ist es möglich, die Probe P bzw. den Probenträger 16 von oben oder von der Seite aus der Probentemperierkammer 10 zu entfernen.

## Patentansprüche

1. Probentemperierkammer für ein Benchtop-Röntgengerät und/oder Röntgenvollschutzgerät, die Probentemperierkammer aufweisend
einen ersten Kammerteil (11) und einen zweiten Kammerteil (12), die miteinander verbindbar und zum Bilden einer geschlossenen Kammer eingerichtet sind,
einen Probenhalter,
eine integrierte Temperiereinrichtung zum Temperieren einer Probe (P),
die an dem Probenhalter angebracht ist,
eine aktive Kühlung zum Abführen von Wärme aus der
Probentemperierkammer, wobei die aktive Kühlung einen Kühlkörper (30) und
einen Ventilator (27) aufweist,
zumindest einen Temperatursensor (19) zum Erfassen der Probentemperatur,
wobei die integrierte Temperiereinrichtung ein Temperierelement (18, 18a) zum Aufwärmen und/oder Abkühlen der Probe aufweist und wobei die integrierte Temperiereinrichtung ferner eine Steuereinheit (23) aufweist, die mit dem zumindest einen Temperatursensor verbunden und zum Ansteuern des Temperierelements in Abhängigkeit von der durch den zumindest einen Temperatursensor erfassten Probentemperatur konfiguriert ist, um eine vorbestimmte Probentemperatur zu erreichen und/oder Temperaturprofile aufzuprägen,
**dadurch gekennzeichnet, dass** die Probentemperierkammer zunden eine Eingabevorrichtung (28) zum Eingeben einer vorbestimmten Probentemperatur oder eines vorbestimmten Proben temperaturbereichs durch Benutzer aufweist.

2. Probentemperierkammer gemäß Anspruch 1, wobei das
Temperierelement ein elektrisches Widerstandselement (18) zum Aufwärmen der Probe aufweist.

3. Probentemperierkammer gemäß Anspruch 1 oder 2, wobei das Temperierelement ein Peltier-Element (18a) zum Aufwärmen und Abkühlen der Probe aufweist.

4. Probentemperierkammer gemäß einem der vorhergehenden Ansprüche, wobei die Steuereinheit in dem ersten Kammerteil angebracht ist, wobei der Kühlkörper und der Ventilator an einer Außenfläche des ersten Kammerteils angebracht sind und wobei der zweite Kammerteil ein röntgenstrahl-durchlässiges Fenster (4) aufweist.

5. Probentemperierkammer gemäß einem der vorhergehenden Ansprüche, wobei der Probenhalter verschiedene Probenvolumen beinhalten kann.

6. Probentemperierkammer gemäß einem der vorhergehenden Ansprüche, ferner aufweisend einen Versorgungsanschluss zum Verbinden der Probentemperierkammer mit einer elektrischen Stromversorgung und/oder einen Datenanschluss zum Verbinden der Probentemperierkammer mit einem Datenanschluss eines Benchtop-Röntgengeräts und/oder Röntgenvollschutzgeräts.

7. Probentemperierkammer gemäß Anspruch 6, wobei der Versorgungsanschluss und/oder der Datenanschluss abnehmbar sind/ist.

8. Probentemperierkammer gemäß einem der vorhergehenden Ansprüche, ferner aufweisend eine Einheit zum Bereitstellen einer drahtlosen Datenverbindung zwischen der Probentemperierkammer und einem Benchtop-Röntgengerät und/oder Röntgenvollschutzgerät.

9. Probentemperierkammer gemäß einem der vorhergehenden Ansprüche ferner aufweisend ein Schnellverschlusselement (2) zur selbstjustierenden Montage der Probentemperierkammer in einem Benchtop-Röntgengerät und/oder Röntgenvollschutzgerät.

10. Probentemperierkammer gemäß einem der vorhergehenden Ansprüche, ferner aufweisend Mittel (14, 15a, 15b) zum gasdichten Verriegeln der geschlossenen Kammer.

11. System zur röntgenstrahl-basierten Analyse einer Probe, insbesondere zur Röntgendiffraktionsmessung, das System aufweisend
ein Benchtop-Röntgengerät oder Röntgenvollschutzgerät und
eine Probentemperierkammer (10, 10') gemäß einem der vorhergenden Ansprüche, die zum Einbringen und Montage in dem Benchtop-Röntgengerät oder Röntgenvollschutzgerät eingerichtet ist.

## Claims

1. Sample temperature control chamber for a benchtop X-ray device and/or a full protection X-ray device, the sample temperature control chamber comprising
a first chamber part (11) and a second chamber part (12), which are connectable together and which are configured for forming a closed chamber,
a sample holder,
an integrated temperature control device for temperature controlling a sample (P) which is attached at the sample holder,
an active cooling system for dissipating heat from the sample temperature control chamber, wherein the active cooling system comprises a heat sink (30) and a ventilator (27),
at least one temperature sensor (19) for determining the sample temperature,
wherein the integrated temperature control device comprises a temperature control element (18, 18a) for heating up and/or cooling down the sample, and
wherein the integrated temperature control device further comprises a control unit (23)
which is connected with the at least one temperature sensor, and
which is configured for controlling the temperature control element in dependence of the sample temperature which is determined by the at least one temperature sensor,
for obtaining a predetermined sample temperature and/or
for enforcing a temperature profile,
**characterized in that**
the sample temperature control chamber further comprises an input device (28) for inputting a predetermined sample temperature or a predetermined sample temperature range by users.

2. Sample temperature control chamber according to claim 1, wherein the temperature control element comprises an electric resistor element (18) for heating up the sample.

3. Sample temperature control chamber according to claim 1 or 2, wherein the temperature control element comprises a Peltier-element (18a) for heating up and for cooling down the sample.

4. Sample temperature control chamber according to one of the preceding claims,
wherein the control unit is attached in the first chamber part,
wherein the heat sink and the ventilator are attached at an outer surface of the first chamber part, and
wherein the second chamber comprises an X-ray permeable window (4).

5. Sample temperature control chamber according to one of the preceding claims, wherein the sample holder can include different sample volumes.

6. Sample temperature control chamber according to one of the preceding claims, further comprising
a supply terminal for connecting the sample temperature control chamber to an electric current supply
and/or
a data terminal for connecting the sample temperature control chamber to a data terminal of a benchtop X-ray device and/or a full protection X-ray device.

7. Sample temperature control chamber according to claim 6, wherein the supply terminal and/or the data terminal are/is removable.

8. Sample temperature control chamber according to one of the preceding claims, further comprising a unit for providing a wireless data connection between the sample temperature control chamber and a benchtop X-ray device and/or a full protection X-ray device.

9. Sample temperature control chamber according to one of the preceding claims, further comprising a quick-release element (2) for a self-adjusted assembly of the sample temperature control chamber in a benchtop X-ray device and/or a full protection X-ray device.

10. Sample temperature control chamber according to one of the preceding claims, further comprising means (14, 15a, 15b) for locking the closed chamber in a gas-tight manner.

11. System for X-ray beam based analysis of a sample, in particular for the measurement of X-ray diffraction, the system comprising
a benchtop X-ray device or a full protection X-ray device and
a sample temperature control chamber (10, 10') according to one of the preceding claims, which is configured for introduction and assembly in the benchtop X-ray device or the full protection X-ray device.

## Revendications

1. Chambre de mise à température d'échantillons pour un appareil à rayons X de table et/ou pour un appareil de protection intégrale contre les rayons X, laquelle chambre de mise à température d'échantillons présente
une première partie de chambre (11) et une deuxième partie de chambre (12), qui peuvent être reliées l'une à l'autre et qui sont mises au point afin de former une chambre fermée,
un support d'échantillon,
un équipement de mise à température intégré servant à mettre à température un échantillon (P), lequel est installé au niveau du support d'échantillon,
un équipement de refroidissement actif servant à évacuer la chaleur de la chambre de mise à température d'échantillons, où l'équipement de refroidissement actif présente un corps de refroidissement (30) et un ventilateur (27),
au moins un capteur de température (19) servant à détecter la température d'échantillon,
où l'équipement de mise à température intégré présente un élément de mise à température (18, 18a) servant à réchauffer et/ou à refroidir l'échantillon et où l'équipement de mise à température intégré présente en outre une unité de commande (23), qui est reliée à l'au moins un capteur de température et qui est configurée afin de piloter l'élément de mise à température en fonction de la température d'échantillon détectée par l'au moins un capteur de température afin d'atteindre une température d'échantillon prédéfinie et/ou afin d'appliquer des profils de température, **caractérisée en ce que** la chambre de mise à température d'échantillons présente de plus un dispositif de saisie (28) servant à la saisie par l'utilisateur d'une température d'échantillon prédéfinie ou d'une plage de températures d'échantillon prédéfinie.

2. Chambre de mise à température d'échantillons selon la revendication 1, où l'élément de mise à température présente un élément de résistance (18) électrique servant à réchauffer l'échantillon.

3. Chambre de mise à température d'échantillons selon la revendication 1 ou 2, où l'élément de mise à température présente un élément de refroidissement thermoélectrique (18a) servant à réchauffer et à refroidir l'échantillon.

4. Chambre de mise à température d'échantillons selon l'une quelconque des revendications précédentes, où l'unité de commande est installée dans la première partie de chambre, où le corps de refroidissement et le ventilateur sont installés au niveau d'une surface extérieure de la première partie de chambre et où la deuxième partie de chambre présente une fenêtre (4) laissant passer les rayons X.

5. Chambre de mise à température d'échantillons selon l'une quelconque des revendications précédentes, où le support d'échantillon peut contenir différents volumes d'échantillon.

6. Chambre de mise à température d'échantillons selon l'une quelconque des revendications précédentes présentant en outre un raccord d'alimentation servant à relier la chambre de mise à température d'échantillons à une alimentation en courant électrique et/ou un raccord de transmission de données servant à relier la chambre de mise à température d'échantillons à un raccord de transmission de données d'un appareil à rayons X de table et/ou à un appareil de protection intégrale contre les rayons X.

7. Chambre de mise à température d'échantillons selon la revendication 6, où le raccord d'alimentation et/ou le raccord de transmission de données peuvent être retirés.

8. Chambre de mise à température d'échantillons selon l'une quelconque des revendications précédentes, présentant en outre une unité servant à fournir une liaison de données sans fil entre la chambre de mise à température d'échantillons et un appareil à rayons X de table et/ou un appareil de protection intégrale contre les rayons X.

9. Chambre de mise à température d'échantillons selon l'une quelconque des revendications précédentes, présentant en outre un élément de fermeture rapide (2) servant à monter avec un ajustement automatique la chambre de mise à température d'échantillons dans un appareil à rayons X de table et/ou dans un appareil de protection intégrale contre les rayons X.

10. Chambre de mise à température d'échantillons selon l'une quelconque des revendications précédentes, présentant en outre des moyens (14, 15a, 15b) servant à verrouiller de manière étanche aux gaz la chambre fermée.

11. Système servant à analyser, sur la base de rayons X, un échantillon, en particulier servant à mesurer la diffraction par rayons X, lequel système présente
un appareil à rayons X de table ou un appareil de protection intégrale contre les rayons X et
une chambre de mise à température d'échantillons (10, 10') selon l'une quelconque des revendications précédentes, laquelle est mise au point afin d'être insérée et montée dans l'appareil à rayons X de table ou dans l'appareil de protection intégrale contre les rayons X.
